(19) Europäisches Patentamt
European Patent Office
Office européen des brevets

(11) Publication number: 0 161 881 B1

(12) # EUROPEAN PATENT SPECIFICATION

(45) Date of publication of patent specification: 23.10.91 (51) Int. Cl.5: C08F 220/54, C08L 33/26

(21) Application number: 85303160.7

(22) Date of filing: 03.05.85

(54) High molecular weight composite materialsfor releasing a water soluble organic compound.

(30) Priority: 07.05.84 JP 89386/84
28.05.84 JP 106466/84

(43) Date of publication of application:
21.11.85 Bulletin 85/47

(45) Publication of the grant of the patent:
23.10.91 Bulletin 91/43

(84) Designated Contracting States:
CH DE FR GB IT LI NL SE

(56) References cited:
EP-A- 0 161 104
US-A- 3 793 445

(73) Proprietor: MITSUI TOATSU CHEMICALS, Inc.
2-5 Kasumigaseki 3-chome
Chiyoda-Ku Tokyo 100(JP)

(72) Inventor: Itoh, Hiroshi
521 Kasamacho, Totsuka-ku
Yokohama Kanagawa-ken(JP)
Inventor: Nakagawa, Toshimi
563-127, Watauchi
Fujisawa Kanagawa-ken(JP)
Inventor: Nitta, Atsuhiko
634-1-154, Nobacho Kohnan-ku
Yokohama Kanagawa-ken(JP)
Inventor: Tanaka, Tomio
8-14-2, Aoto
Katsushika-ku Tokyo(JP)
Inventor: Kamio, Hideo
728-5, Sogabetsusho
Odawara Kanagawa-ken(JP)
Inventor: Nagai, Katsutoshi
6-61, Shimohanazawa 2-Chome
Yonezawa Yamagata-ken(JP)

(74) Representative: Harvey, David Gareth et al
Graham Watt & Co. Riverhead
Sevenoaks Kent TN13 2BN(GB)

EP 0 161 881 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a high molecular composite material containing as one component thereof a homopolymer or copolymer of an N-substituted derivative of acrylamide or methacrylamide, for releasing a water soluble organic compound.

High molecular composite materials of various types have hitherto been found and various applications for them have been proposed. As interactions upon which the formation of such composite materials rely, may for example be mentioned ionic bonds, hydrogen bonds, electrostatic bonds, charge transfer bonds, and hydrophobic bonds. The combination of compounds making up each high molecular composite material is determined by the type of such an interaction. Once one of the components making up such a high molecular composite material has been chosen, a limitation is imposed on the other component.

It is this limitation to the combination of both components of each high molecular composite material and hence the limited possibility in variety of combinations of such components that no high molecular composite materials have found actual utility although a variety of high molecular composite materials has been proposed to date.

For example, investigations have been made on the interactions between poly(N-vinylpyrrolidone), one of N-substituted lactam derivatives having structures similar to N-substituted amide derivatives of acrylamide or methacrylamide, and various materials. Due to insufficient interactions and the like, none of these investigations has yet turned to high molecular composite materials satisfactory enough to permit their practical applications.

On the other hand, there has recently been reported an investigation on the interaction between an N-isopropylacrylamide graft-polymerized on cotton fabric and one of polyethyleneglycol mono-p-nonyl-phenyl ether. Such an investigation does not suggest the formation of any of high molecular composite materials of this invention.

US-A-3,793,445 discloses a wettable polymer gel containing at least one binding protein physically and essentially permanently entrapped in the gel matrix. The gel is prepared by dissolving acrylamide monomer and N,N'-methylene-bis-acrylamide in a physiologic buffer solution containing a suitable dilution of an antibody protein. The gel is described as a reagent for use in competitive radioimmunoassay techniques for measuring antigens and haptenes. This patent neither contemplates nor discloses any technique for directly releasing a water soluble organic compound.

An object of this invention is to provide a variety of high molecular composite materials each of which contains, as a component thereof, a homopolymer or copolymer of at least one N-substituted derivative of acrylamide and methacrylamide [hereinafter abbreviated as "(meth)acrylamide)].

The invention is aimed at providing high molecular composite materials which permit easy control of their properties and which can be formed with ease into films and sheets, fibers and various moldings, inter alia.

The present invention provides a high molecular composite material for releasing a water soluble organic compound comprising

(A) a water soluble organic compound selected from:

(a) compounds containing active hydrogen atoms, which are substituted by one or more hydroxyl, carboxyl, sulfonic acid, phosphoric acid or mercapto groups; and
(b) compounds containing a hydrophobic group, which contain, as their hydrophobic groups, cyclic structures such as aromatic rings and long-chain hydrocarbon radicals, and

(B) a water insolubilized polymeric adsorbent material selected from:

(a) a homopolymer of a monomer selected from N-alkyl- or N-alkylene-substituted (meth)acrylamides represented by the following general formula (I) or (II):

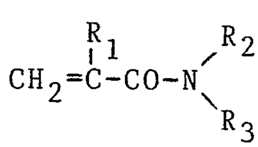

(I)

wherein $R_1$ is a hydrogen atom or methyl group, $R_2$ is a hydrogen atom or a methyl or ethyl group, and $R_3$ is a methyl, ethyl or propyl group, or

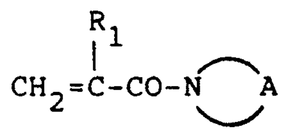

(II)

wherein $R_1$ is a hydrogen atom or methyl group and A is a member selected from the group consisting of $-(CH_2)_n-$ or $-(CH_2)_2-0-(CH_2)_2-$ wherein n is an integer of from 4 to 6;

(b) a first copolymer of two or more monomers selected from said (meth)acrylamides, and

(c) a second copolymer of at least one monomer selected from said (meth)acrylamides and one or more monomers other than said (meth)acrylamides and copolymerizable therewith.

The invention also provides a method for releasing a water soluble organic compound which comprises the steps of:

(1) forming a high molecular releasing material comprising

(A) a water soluble organic compound selected from:

(a) compounds containing active hydrogen atoms, which are substituted by one or more hydroxyl, carboxyl, sulfonic acid, phosphoric acid or mercapto groups; and

(b) compounds containing a hydrophobic group, which contain, as their hydrophobic groups, cyclic structures such as aromatic rings and long-chain hydrocarbon radicals, and

(B) a water insolubilized polymeric adsorbent material selected from:

(a) a homopolymer of a monomer selected from N-alkyl- or N-alkylene-substituted (meth)acrylamides represented by the following general formula (I) or (II):

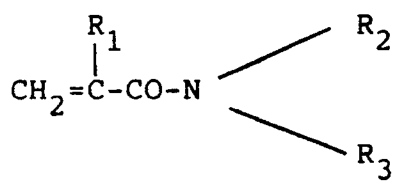

(I).

wherein $R_1$ is a hydrogen atom or methyl group, $R_2$ is a hydrogen atom or a methyl or ethyl group, and $R_3$ is a methyl, ethyl or propyl group, or

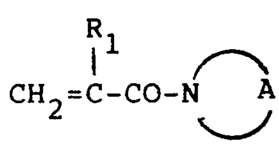

(II)

wherein $R_1$ is a hydrogen atom or methyl group and A is a member selected from the group consisting of $-(CH_2)_n-$ or $-(CH_2)_2-0-(CH_2)_2-$ wherein n is an integer of from 4 to 6;

(b) a first copolymer of two or more monomers selected from said (meth)acrylamides, and

(c) a second copolymer of at least one monomer selected from said (meth)acrylamides and one or more monomers other than said (meth)acrylamides and copolymerizable therewith; and

(2) subsequently contacting said high molecular releasing material containing water soluble organic compounds with an aqueous medium.

Preferred embodiments of the present invention will now be explained in detail in the following

description.

The base material of this invention permits the formation of composite materials with a very large number of low molecular or high molecular compounds because it contains a homopolymer or copolymer of at least one of N-substituted (meth)acrylamides as one component thereof. It has the following advantageous effects.

First of all, the formation of each composite material takes place between neutral molecules unlike ordinary ionic composite materials. Therefore, its bonds are not hard but soft. Secondly, intermolecular forces making up each high molecular composite material vary depending on the temperature. The properties of the composite material can hence be controlled by heating or cooling the composite material. Thirdly, the formation of a high molecular composite material of this invention into films and sheets, fibers, various moldings and so on may be facilitated because it can be dissolved in a solvent or can be melted.

The high molecular composite material of this invention is formed between the above-described homopolymer or copolymer and a low or high molecular compound, relying not on covalent bonds but on forces developed between their molecules. As a result, there are developed changes to the properties of its solution such as its viscosity, cloud point and the like, deposition of the composite material from a solution thereof, new properties imparted owing to the formation of the composite material, and so on.

The homopolymer or copolymer contained in the high molecular composite material of this invention typically has the property that, when its aqueous solution is progressively heated, it is rendered hydrophobic to develop cloud. It should however be borne in mind that the homopolymer or copolymer is not necessarily limited to those having such properties as mentioned above. Any homopolymer or copolymer may be used so long as its hydrophilicity varies depending on the temperature. Such homopolymers and copolymers have amphiphilic properties, which means that they have such wide solubility that they are both hydrophilic and hydrophobic as demonstrated by their solubility in both organic solvents such as benzene and water.

Examples of the above-described homopolymer and copolymers, include homopolymers and copolymers of at least one of the following N-alkyl- or N-alkylene-substituted (meth)acrylamides:

N-n-Propylacrylamide;
N-n-Propylmethacrylamide;
N-Isopropylacrylamide;
N-Isopropylmethacrylamide;
N-Ethylacrylamide;
N,N-Diethylacrylamide;
N-Ethylmethacrylamide;
N,N-dimethylacrylamide;
N,N-dimethylmethacrylamide;
N-Methyl-N-ethylacrylamide;
N-Acryloylpyrrolidine;
N-Methacryloylpyrrolidine;
N-Acryloylpiperidine;
N-Methacryloylpiperidine;
N-Acryloylmorpholine; and
N-Methacryloylmorpholine.

In addition, one or more monomers selected from, for example, hydrophilic monomers, ionic monomers and hydrophobic monomers may additionally be copolymerized with one or more of the (meth)acrylamide monomers.

As exemplary hydrophilic monomers, may be mentioned acrylamide, methacrylamide, N-methylacrylamide, N-methylmethacrylamide, diacetoneacrylamide, hydroxyethyl methacrylate, hydroxyethyl acrylate, hydroxypropyl methacrylate, hydroxypropyl acrylate, various methoxypolyethyleneglycol methacrylates, various methoxypolyethyleneglycol acrylates, N-vinyl-2-pyrrolidone, N-acryloyl alanine and N-methacryloyl alanine. Further, vinyl acetate or glycidyl methacrylate, for example, may be introduced by copolymerization, followed by hydrolysis to impart hydrophilicity.

Illustrative of ionic monomers are acids such as acrylic acid, methacrylic acid, vinylsulfonic acid, allylsulfonic acid, methallylsulfonic acid, styrenesulfonic acid, 2-acrylamido-2-phenylpropanesulfonic acid and 2-acrylamido-2-methyl-propanesulfonic acid and their salts; amines such as N,N-dimethylaminoethyl methacrylate, N,N-diethylaminoethyl methacrylate, N,N-dimethylaminoethyl acrylate, N,N-dimethylaminopropyl methacrylamide and N,N-dimethylaminopropylacrylamide and their salts. Further, it is also possible to impart ionic properties by introducing various acrylates, methacrylates, acrylamides, methacrylamides or acrylonitriles by copolymerization and then hydrolyzing the thus-introduced moieties.

Hydrophobic monomers, may, for example, be N-alkylacrylamide derivatives and N-alkylmethacrylamide derivatives such as N-n-butylacrylamide, N-n-butylmethacrylamide, N-tert-butylacrylamide, N-tert-butylmethacrylamide, N-n-hexylacrylamide, N-n-hexylmethacrylamide, N-n-octylacrylamide, N-n-octylmethacrylamide, N-tert-octylacrylamide, N-n-dodecylacrylamide, N-n-dodecylmethacrylamide, N,N-diglycidylacrylamide,and N,N-diglycidylmethacrylamide; N-(ω-glycidoxyalkyl)acrylamide derivatives and N-(ω-glycidoxyalkyl)methacrylamide derivatives such as N-(4-glycidoxybutyl)acrylamide, N-(4-glycidoxybutyl)-methacrylamide, N-(5-glycidoxypentyl)acrylamide, and N-(6-glycidoxyhexyl)acrylamide; acrylate derivatives and methacrylate derivatives such as ethyl acrylate, methylmethacrylate, butyl methacrylate, butyl acrylate, lauryl acrylate, 2-ethylhexyl methacrylate and glycidyl methacrylate; acrylonitrile; methacrylonitrile; vinyl acetate; vinyl chloride; olefins such as ethylene, propylene and butene; styrene; α-methylstyrene; butadiene; and isoprene.

The acceptable proportion of such a hydrophilic, ionic or hydrophobic monomer to the acrylamide or methacrylamide derivatives may vary depending on the chosen acrylamide or methacrylamide derivative and the above-mentioned monomer. Although not sweepingly applicable to every combination, the hydrophilic, ionic and hydrophobic monomers may generally be used in amounts of 60 wt.% or less, 30 wt.% or less and 60 wt.% or less, respectively.

Specific polymerization methods which may be used for production of the polymers used by this invention as described above may be, by way of example:

(1) to polymerize a monomer as is without diluting it in a solvent and to produce a polymer block;

(2) after polymerizing in a solvent, to dry the resultant polymer or to cause the polymer to precipitate in a poor solvent, thereby obtaining the polymer;

(3) to obtain the polymer in granular form by the suspension polymerization method;

(4) to obtain a polymer latex by the emulsion polymerization method; and

(5) to integrate the polymer with a water-insoluble fibrous material or porous material by impregnation- or graft-polymerizing a solution of the polymer to the water-insoluble fibrous material or porous material.

For polymerization in the method (2), it is possible to use a variety of solvents because the N-substituted (meth)acrylamides have very good miscibility with such solvents. More specifically, exemplary solvents are alcohols such as methanol and ethanol, cyclic ethers such as tetrahydrofuran and 1,4-dioxane, ketones such as acetone, amides such as N,N-dimethylformamide and N,N-dimethylacetamide, aromatic hydrocarbons such as benzene and toluene, halogenated hydrocarbons such as chloroform and methylene dichloride, dimethyl sulfoxide, N-methylpyrrolidone, chain glycols such as diglyme and tetraglyme, and basic solvents such as pyridine, inter alia.

In the above polymerization methods, the polymerization may be initiated only by heating the polymerization systems. However, use of a polymerization initiator can generally bring about better results. Any polymerization initiators may be used as long as they can initiate radical polymerization. For example, inorganic peroxides, organic peroxides, combinations of such peroxides and reducing agents, and azo compounds may be mentioned. More specifically, such polymerization initiators may include ammonium persulfate, potassium persulfate, hydrogen peroxide, tert-butyl peroxide, benzoyl peroxide, cumenehydroxy peroxide, tert-butyl-peroxy-2-ethyl hexanoate, and butyl perbenzoate. As reducing agents which may be used in combination with such polymerization initiators, may be mentioned sulfites, hydrogensulfites, salts of lower valence metals such as iron, copper and cobalt, organic amines such as aniline and reducing sugars such as aldose and ketose. Usable azo compounds may include azobisisobutyronitrile, 2,2'-azobis-2-amidinopropane hydrochloride, 2,2'-azobis-2,4-dimethylvaleronitrile and 4,4'-azobis-4-cyanovaleic acid. Two or more of the above-described polymerization initiators may be used in combination. In this case, the amount of the polymerization initiator to be added may be within commonly-employed ranges,.for example, within the range of 0.01 - 5 wt.%, or preferably 0.05 - 2 wt.%, both based on the weight of the monomer.

Among the thus-obtained polymers, the block-like polymer or the polymer obtained after evaporation of the solvent may be crushed into a powdery form or may be melted and then formed into a flake-, fiber- or film-like form. The granular polymer may be provided as a granular form without any further processing. The latex-like polymer may be employed to impregnate and coat a fibrous or porous material such as fabric or paper, or may be formed into films.

The particular form of the polymer or copolymer may suitably be selected depending on how it is used. When used, for example, in a suspended or dispersed state in a liquid as in a fluidized bed, it may often be used in the form of powder or beads.

A powdery product may be obtained by various methods as described above, for example, by conducting gel polymerization in an aqueous solution and then drying and grinding the resultant resin. A granular product may generally be produced with ease by the suspension polymerization method. Since the N-alkyl- or N'-alkylene-substituted (meth)-acrylamide derivative has generally high solubility in water,

suspension polymerization may be practiced as the reversed phase suspension technique in which a monomer or its aqueous solution is dispersed in an oil, as the salted-out suspension polymerization technique in which an electrolyte is dissolved in a large amount in an aqueous solution to reduce the solubility of a monomer, or as the precipitation and suspension polymerization technique in which polymerization is carried out at the elevated temperature of the cloud point of the intended polymer or higher so as to cause the polymer to precipitate. In addition, it is also possible to integrate the polymer with porous beads such as silica, alumina or zeolite, for example, by impregnating the porous beads with a solution of the polymer or effecting graft polymerization on such porous beads. It is also possible to incorporate a third component miscible with the monomer or monomers but immiscible with the resulting polymer when it is polymerized by one of the above-mentioned polymerization techniques. Incorporation of such a third component permits production of a porous resin.

The above-described homopolymer or copolymer of at least one of the N-substitued (meth)acrylamides or a copolymer between at least one of the (meth)acrylamides and one or more other copolymerizable monomers, which homopolymer or copolymer pertains to this invention, is water-insolubilized prior to its application.

For insolubilizing, the following methods may be employed:

(1) to copolymerize a crosslinkable monomer containing at least two double bonds per molecule with the above-described N-substituted acrylamide or methacrylamide;

(2) to copolymerize the polymer with N-alkoxymethyl(meth)acrylamide derivatives;

(3) to increase the proportion of the above-mentioned hydrophobic monomer and to copolymerize it with N-substituted acrylamide or methacrylamide;

(4) to effect polymerization by the bulk polymerization method;

(5) to subject the polymer to a heat treatment;

(6) to integrate the polymer with a water-insoluble fibrous material such as cellulose or a water-insoluble porous material such as zeolite;

(7) when the polymer contains, for example, hydroxyl, amino or carboxy groups, to cause such groups to react with a polyfunctional compound such as epichlorohydrin; and

(8) to copolymerize the monomer represented by the general formula (I) with a monomer containing a substituent group such as carboxyl group, sulfo group or hydroxyl group having at least one active hydrogen atom, or to form the polymer of the monomer represented by the general formula (I) and a polymer of the above monomer into a polymer complex, thereby insolubilizing the polymer.

The above insolubilizing methods will next be described more specifically.

In the first method, it is possible to use as exemplary crosslinkable monomers N,N'-methylenebisacrylamide, N,N-diallylacrylamide, triacrylic formal, N,N-diacryloylimide, N,N-dimethacryloylimide, ethyleneglycol diacrylate, ethyleneglycol dimethacrylate, various polyethyleneglycol diacrylates, various polyethyleneglycol dimethacrylates, propyleneglycol dimethacrylate, propyleneglycol diacrylate, various polypropyleneglycol diacrylates, various polypropyleneglycol dimethacrylates, 1,3-butyleneglycol diacrylate, 1,3-butyleneglycol dimethacrylate, 1,4-butyleneglycol dimethacrylate, glycerol dimethacrylate, neopentylglycol dimethacrylate, trimethylolpropane triacrylate, trimethylolpropane trimethacrylate, trimethylolethane trimethacrylate, trimethylolethane triacrylate, tetramethylolmethane tetramethacrylate, tetramethylolmethane tetraacrylate, divinylbenzene and diallyl phthalate. The proportion of each of these crosslinkable monomers to the above described N-substituted (meth)acrylamide may depend on the desired crosslinking degree. Although not applicable sweepingly to every situation, the crosslinkable monomers may each be used in an amount of 0.01 - 10 wt.% based on the total monomer.

N-Alkoxymethyl(meth)acrylamide derivatives useful in the practice of the second method may include N-hydroxymethyl(meth)acrylamides. For example, N-methylol(meth)acrylamides, N-methoxymethyl(meth)-acrylamides, N-ethoxymethyl(meth)acrylamides, N-n-butoxymethyl(meth)acrylamides and N-tert-butoxymethyl(meth)acrylamides may be used. The proportion of each of such N-alkoxymethyl(meth)-acrylamide derivatives to the above-described N-substituted (meth)acrylamides may vary depending on the combination of the N-substituted acrylamides and the N-alkoxymethyl(meth)acrylamide derivatives. Although not applicable sweepingly to every combination, the N-alkoxymethyl(meth)acrylamide derivatives may each be used generally in an amount of 0.01 - 30 wt.%.

In the third method, the proportion of the hydrophobic monomer to the N-substituted (meth)acrylamide having amphililic property may vary depending on the combination of the N-substituted (meth)acrylamide and the hydrophobic monomer. Although not conclusively limitable, the proportion of the hydrophobic monomer may generally be 1 wt.% or more, or preferably 3 wt.% or more. In this case, the copolymerization may be effected by the random copolymerization method, block copolymerization method or graft copolymerization method.

In the fourth method, the polymerization is carried out by the bulk polymerization method. This may be practiced by polymerizing the monomer as is without diluting it with any solvent to obtain a polymer block or by suspending the monomer in a solvent and then effecting the polymerization of the monomer in the form of droplets so as to obtain a granular polymer.

In the fifth method, the polymer is subjected to a heat treatment. The heating conditions may vary depending on the polymer and do not remain constant. A polymer obtained by, for example, bulk polymerization, suspension polymerization or solution polymerization is treated generally at 60 - 250 °C, or preferably at 80 - 200 °C. In this case, when the polymer is obtained by the solution polymerization method, its heat treatment may be carried out concurrently with its drying or with the evaporation of the solvent.

Turning to the sixth method in which the polymer is integrated with, for example, a fibrous material, the above-described N-substituted (meth)acrylamide may be impregnation- or graft-polymerized to a water-insoluble fibrous material such as natural or synthetic fibers such as cellulose fibers, nylon fibers, polyester fibers or acrylic fibers or non-woven fabric made of polypropylene or an ethylene-propylene copolymer, or to a water-insoluble porous material such as silica, alumina or zeolite. Alternatively, the fibrous or porous material may be impregnated with the polymer.

In the seventh method, the polyfunctional compound such as epichlorohydrin is reacted with the polymer so that the polymer is crosslinked and insolubilized. In this method, it is necessary to introduce hydroxyl, amino or carboxy groups in advance in the polymer. Amino or carboxy groups can be introduced readily by copolymerization. In the case of hydroxyl groups, they may be introduced by copolymerization of hydroxyethyl methacrylate, isopropenyl phenol; by first introducing, for example, vinyl acetate or glycidyl methacylate by the copolymerization method and then saponifying it with a basic material to form hydroxyl groups. Thereafter, the above-prepared polymer and a polyfunctional compound such as epichlorohydrin are reacted to each other so as to crosslink and insolubilize the polymer. When the polymer is insolubilized in an aqueous solution as is, it is converted into an agar-like state. By simply crushing the thus-obtained polymer, it can be used as is. When it is solubilized by dispersing the aqueous solution in an oil, granular gels are obtained.

According to the eighth method, a polymer complex is formed by copolymerizing the polymer with the above-described monomer containing an active hydrogen or combining the polymer with a copolymer of such a monomer. In this case, it is also possible to form polymer complex by regeneration of the active hydrogen atoms of the copolymer which are substituted with ammonium ions or the like by the addition of an acid.

The above-described eight methods may be used singly or in combination. More effective results are, in general, obtained when two or more of these methods are used in combination.

As the other component which makes up the high molecular composite material of this invention, a very wide variety of compounds may be mentioned. Among such compounds, preferred ones may be classified into two groups, namely, (1) compounds containing active hydrogen and (2) compounds containing hydrophobic groups. These compounds may be used no matter whether they are low molecular compounds or high molecular compounds.

Compounds containing active hydrogen are those substituted by one or more hydroxyl, carboxyl, sulfonic, phosphoric or mercapto groups. Among such compounds, preferred ones are compounds substituted especially by substituent groups containing active hydrogen bonded to oxygen atom, for example, hydroxyl, carboxyl, sulfonic or phosphoric groups. Hydroxyl-substituted compounds may be divided roughly into low molecular compounds and high molecular compounds. Low molecular compounds may in turn be classified into phenols and alcohols. Phenols are compounds each of which contains one or more hydroxyl groups substituted to the aromatic ring, including for example phenol, cresol, xylenol, hydroquinone, benzenetriol, salicyl alcohol, naphthol, anthrol, nonylphenol, carvacrol, vinylphenol, isopropenylphenol, diphenylphenol, biphenyldiol, naphthylphenol, phenylnaphthol, p-cumylphenol, 4,4'-dihydroxydiphenyl-2,2-propane, 4,4'-dihydroxydiphenylsulfon. Also included are those substituted to aromatic rings by halogen atom or atoms and/or nitro, amino, thiol and/or alkoxy groups in addition to alkyl or alkenyl groups.

As alcohols, there are those individually containing one or more hydroxyl groups substituted to an aliphatic hydrocarbon radical, those each containing a hydroxyl group bonded to at least one end of a polyalkylene glycol, and those containing hydroxyl groups substituted to heterocyclic rings. As compounds each containing one or more hydroxyl groups substituted to a saturated aliphatic, alicyclic hydrocarbon radical or aralkyl radical, may for example be mentioned methanol, ethanol, butanol, hexanol, octanol, decanol, lauryl alcohol, stearyl alcohol, ethylene glycol, propylene glycol, butanediol, glycerol, pentaerythritol, pinacol, cyclohexanol, cyclohexanediol, 4,4'-diphenyldicyclohexyl-2,2-propane, menthol, benzyl alcohol, phenethyl alcohol. Also included are those each containing one or more hydroxyl groups substituted to a side chain hydrocarbon radical, such as hydroxyethyl acrylate, hydroxyethyl methacrylate, or N-methylolacrylamide. As those formed each by substituting one or more hydroxyl groups to an unsaturated aliphatic or alicyclic hydrocarbon radical, may be mentioned allyl alcohol, methallyl alcohol, propargyl alcohol, butanediol, butenol, cyclohexenyl alcohol, and cyclohexenediol.

As polyalkylene glycols at least one end of each of which is hydroxyl group, may for example be included polyalkylene glycols such as diethylene glycol, dipropylene glycol, triethylene glycol, and tripropylene glycol, those obtained each by substituting the hydroxyl group at one end of one of the above polyalkylene glycols with an alkoxyl group, and those substituted by phenoxy groups such as polyethyleneglycol nonylphenyl ether.

As those containing hydroxyl groups substituted to heterocyclic rings, there are for example quinolinol, indolol, hydroxythiophene, and hydroxypiperidine.

High molecular compounds are homopolymers and copolymers of hydroxyl-substituted monomers such as hydroxyethyl methacrylate, hydroxyethyl acrylate, N-methylolacrylamide, vinylphenol, and isopropenyl phenol as well as copolymers between such hydroxyl-substituted monomers and other copolymerizable monomers, and also include those obtained by hydrolyzing homopolymers or copolymers of vinyl acetate, and glycidyl methacrylate so as to put back hydroxyl groups thereto. The above-described copolymerizable monomers may also include the above-described hydrophobic monomers, hydrophilic monomers and ionic monomers. Further, (meth)acrylamide and N-substituted derivatives thereof may also be employed.

Carboxyl-substituted compounds may be roughly divided into low molecular compounds and high molecular compounds. The low molecular compounds include those substituted to aliphatic hydrocarbon radicals, those substituted alicyclic or aromatic hydrocarbon radicals, and those substituted to heterocyclic groups. As those obtained each by substituting one or more carboxyl groups to an aliphatic hydrocarbon radical, may for example be mentioned formic acid, acetic acid, propionic acid, butyric acid, valeric acid, pivalic acid, lauric acid, myristic acid, palmitic acid, stearic acid, oxalic acid, malonic acid, succinic acid, gultaric acid, adipic acid, pimelic acid, suberic acid, azelaic acid, sebacic acid, butanetricarboxylic acid, hexanetricarboxylic acid, acrylic acid, propiolic acid, methacrylic acid, crotonic acid, oleic acid, maleic acid, fumaric acid, and citraconic acid.

Illustrative of those obtained each by substituting one or more carboxyl groups to an alicyclic or aromatic hydrocarbon radical may include cyclohexanecarboxylic acid, camphoric acid, benzoic acid, phthalic acid, isophthalic acid, terephthalic acid, naphthoic acid, toluic acid, biphenylcarboxylic acid, benzenetricarboxylic acid, pyromellitic acid, naphthalenetricarboxylic acid, phenylacetic acid, phenylpropionic acid, cinnamic acid, naphthalenetriacetic acid, naphthalnehexanoic acid. Also included are those obtained by substituting halogen atoms, nitro group, amino group, thiol group, and alkoxy groups to aromatic rings.

As those obtained each by substituting one or more carboxyl groups to a heterocyclic ring, may for example be mentioned furoic acid, thenoic acid, nicotinic acid, isonicotinic acid, and pyrrolecarboxylic acid. Also included are amino acids obtained by substituting amino groups to the above compounds. As such amino acids, may for example be mentioned alanine, $\beta$-alanine, phenylalanine, arginine, cystine, glycine, histidine, serine, isoleucine, lysine, methionine, cysteine, tryptophan, asparatic acid, glutamic acid, norvaline, norleucine, ornithine, proline, sarcosine, threonine, thronine, tyrosine, and valine.

Exemplary high molecular compounds may include homopolymers and copolymers of unsaturated carboxylic acids such as acrylic acid, propiolic acid, methacrylic acid, maleic acid, and fumaric acid as well as copolymers between such unsaturated carboxylic acids and other copolymerizable monomers. Also included are those obtained by hydrolyzing homopolymers or copolymers of various acrylates, methacrylates, acrylamides, methacrylamides, acrylonitriles, and maleic anhydrides so as to put back carboxylic groups thereto. As the above-mentioned other copolymerizable monomers, may be mentioned the above-described hydrophobic, hydrophilic and ionic monomers. Further, (meth)acrylamide and its N-substituted derivatives may also be used.

In addition, those obtained by introducing both hydroxyl and carboxyl groups to each molecule are also included. As such compounds, may for example be mentioned glycolic acid, lactic acid, $\beta$-hydroxypropionic acid, glyceric acid, tartronic acid, malic acid, tartaric acid, tropic acid, benzilic acid, salicylic acid, vanillic acid, protocatechuic acid, and gallic acid.

Compounds substituted by sulfonic groups may be divided into low molecular compounds and high molecular compounds in the same manner as described above. As low molecular compounds, may be mentioned methanesulfonic acid, ethanesulfonic acid, allylsulfonic acid, methallylsulfonic acid, 2-acrylamido-2-methylpropanesulfonic acid, 2-acrylamido-2-phenylpropanesulfonic acid, benzenesulfonic acid, p-toluenesulfonic acid, styrenesulfonic acid, naphthalenesulfonic acid, alkylnaphthalenesulfonic acid, and 2-hydroxy-2-phenylpropanesulfonic acid.

On the other hand, exemplary high molecular compounds may include homopolymers and copolymers

of unsaturated sulfonic acids such as allylsulfonic acid, methallylsulfonic acid, 2-acrylamido-2-methylpropanesulfonic acid, 2-acrylamido-2-phenylpropanesulfonic acid, and styrenesulfonic acid as well as copolymers between such unsaturated sulfonic acids and other copolymerizable monomers. Naphthalenesulfonic acid-formaldehyde condensation products may also be used.

As the other copolymerizable monomers, may be mentioned the above-described hydrophobic monomers, hydrophilic monomers and ionic monomers. In addition, (meth)acrylamide and its N-substituted derivatives may also be used.

Furthermore, those containing both hydroxyl and sulfonic groups substituted per molecule are also included.

Among compounds substituted by phosphoric groups, low molecular compounds include various mono- and disubstituted phosphoric acid esters. As such esters, may for example be mentioned phenylphosphoric acid, diphenylphosphoric acid, phytic acid, 2-methacyloxyethylphosphoric acid, 2-acryloxyethylphosphoric acid, and 2-acrylamido-2-methylpropylphosphoric acid.

On the other hand, as high molecular compounds substituted by phosphoric groups, may be mentioned homopolymers and copolymers of unsaturated phosphoric acid esters such as 2-methacryloxyethyl phosphate, 2-acryloxyethyl phosphate, and 2-acrylamido-2-methylpropyl phosphate, as well as copolymers between such unsaturated phosphoric acid esters and other copolymerizable monomers. Also included are various phosphoric acid esters playing important role in the biochemical field. More specifically, may for example be mentioned orthophosphoric acid esters of saccharides such as hexose phosphate, various nucleotides formed of saccharides bonded to bases and phosphoric acid bonded to the saccharides to form esters, and polyphosphoric acid esters such as ADP and ATP.

In compounds containing hydrophobic groups, there are those containing, as their hydrophobic groups, cyclic structures such as aromatic rings and long-chain hydrocarbon radicals. More specifically, may be mentioned surfactants, proteins, physiologically-active substances such as antibiotics, amino acids, aromatic compounds, colorants and perfumes. They are generally hydrophobic by themselves but still have solubility in water.

As surfactants, anionic, non-ionic, cationic and amphoteric surfactants are all included. As anionic surfactants, may be mentioned fatty acid soaps, N-acylamino acids and their salts, salts of alkylethercarboxylic acids, acylated peptides, salts of alkyl benzenesulfonic acids, salts of alkylnaphthalenesulfonic acids, salts of dialkylsulfosuccinic acid esters, salts of α-olefin-sulfonic acids, N-acylmethyltaurine, sulfonated oils, higher alcohol sulfates, alkyl ether sulfates, polyoxyethylenealkyl phenyl ether sulfates, phosphoric acid esters. Illustrative of non-ionic surfactants may include alkyl and alkylaryl polyoxyethylene ether, alkylarylformaldehyde condensed polyoxyethylene ether, block polymers containing polyoxypropylene groups as hydrophobic groups, polyoxyethylene ethers of glycerin esters, polyoxyethylene ethers of sorbitan esters, polyoxyethylene ethers of sorbitol esters, polyethylene glycol fatty acid esters, glycerin esters, sorbitan esters, propylene glycol esters, sucrose esters, fatty acid alkanol amides, polyoxyethylene fatty acid amides, polyoxyethylene alkylamines, alkylamine oxides. As cationic surfactants, may for example be mentioned aliphatic amine salts, and their quaternary ammonium salts, aromatic and heterocyclic quaternary ammonium salts. As amphoteric surfactants, may for example be mentioned carboxybetaine type surfactants, aminocarboxylic acid type surfactants, and imidazolinium betaine type.

As proteins, those soluble in water are preferred. A very wide range of proteins may be employed. Since proteins are polypeptides having molecular weights in the range of from 1,000 to 1,000,000, their types are extremely diversified and cannot all be exemplified. Their representative examples are only given below: sucrase, glucagon, cytochrome C, myoglobin, chymotrypsinogen, egg white albumin, ovomucoid, malic acid dehydrogenase, bovine serum albumin, transferrin, E. coli phosphatase, lactoperoxidase, fetuin, glyceraldehyde-8-phosphoric acid dehydrogenase, lactic acid dehydrogenase, human serum albumin, aldolase, yeast alcohol dehydrogenase, ceruloplasmin, fumarase, catalase, γ-globulin, R-phycoerythrin, α-conarakin, fibrinogen, apoferritin, urease, β-galactosidase, ferritin, and α-crystallin.

As physiologically-active substances such as antibiotics, may be mentioned physiologically-active substances contained in antibiotics followed by hypnosedatives, antiepileptics, antipyretic, analgesic and antiphlogistic drugs, mental and nervous drugs, obtundents, muscle relaxants, autonomic drugs, sense organ drugs, antihistamines, cardiotonics, antiarrhythmics, hypotensive and diretic drugs, vasodilators, therapeutic drugs for arteriosclerosis, anhelation drugs, antibechic and expectorant drugs, digestive organ drugs, adrenal hormone preparations, sex hormone preparations, other hormone preparations, bacteriocidal and disinfectant agents, vitamin preparations, nourishing, antiasthenic and alterative agents, anticoagulants, antihemorrhagics, liver drugs, therapeutic drugs for intoxication, enzyme preparations, antidiabetics, antimalignant tumor drugs, chemotherapeutic drugs, biologicals, antihelminthics, antiprotozoals, narcotics. Each of them includes a number of compounds of different types. Even taking antibiotics by way of

example, there are many compounds which may be classified into penicillin-type antibiotics, cephalosporin C-type antibiotics, macrolide-type antibiotics, chloramphenicol-type antibiotics, tetracycline-type antibiotics.

As amino acids, those described above may be applied. Amino acids substituted by hydrophobic groups such as aromatic rings can provide high molecular composite materials having stronger intermolecular forces. As aromatic compounds, may be used cyclic hydrocarbon compounds such as benzene, naphthalene, anthracene, and phenanthrene or those containing fused rings obtained by condensing heterocyclic rings on cyclic carbon compounds such as indole, carbazole, benzofuran, anthraquinone, and benzothiophene. Also included are those obtained by substituting one or more alkyl groups, halogen atoms, nitro groups, amino groups or the like to the above aromatic or heterocyclic rings, those similar to the aforementioned ones substituted by one or more carboxyl groups, or sulfonic groups, but further ionized by replacing the active hydrogen of their substituent groups with metal ions such as alkali metal ions, and those formed by converting their hydroxyl groups into oxygen such as benzoquinone.

As colorants, may be mentioned those obtained by introducing chromogenic groups into the above-described aromatic compounds. They may be roughly classified into dyes, organic pigments, coloring agents, and various titration indicators. Exemplary dyes may include cationic dyes, basic dyes, acid dyes, disperse dyes, substantive dyes, sulfur dyes, vat dyes, azoic dyes, fluorescent brightening dyes, and composite dyes.

As organic pigments, may be mentioned soluble azo pigments, insoluble azo pigments (naphthol type), insoluble azo pigments (anilide type), phthalocyanin type pigments, color lakes, mordant type pigments (alizarin type), vat pigments. As coloring agents, may be mentioned synthetic tar colors and their aluminum lakes as well as natural colors, all of which are principally employed as food colors. They are for example red food colors, yellow food colors, green food colors, blue food colors, $\beta$-carotene, iron chlorophyllin sodium, and copper chlorophyll.

As various titration indicators, may be mentioned neutralization titration indicators such as Methyl Red and phenolphthalein, chelate titration indicators such as ureo chromium black and cresolphthalein complexon, redox titration indicators such as Methylene Blue and diphenylamine-4-sulfonic acid, and adsorption indicators such as fluorescein and dichlorofluorescein.

Perfumes contain aromatic rings or long-chain alkyl groups as their skeletal structures, to each of which are substituted one or more groups such as acyl, alkoxy, formyl, alkyl, alkenyl, alkoxyacyl, amino, hydroxyl, lactam, hydroxyalkyl, hydroxyalkenyl, formylalkyl, formylalkenyl, carboxyalkyl, carboxyalkenyl, alkoxycarbonylalkyl, alkoxycarbonylalkenyl and alkoxycarbonyl groups.

In order to form a high molecular composite material which containing a homopolymer or copolymer of at least one of the above-described N-substituted (meth)acrylamide derivatives, either one of the following two methods may be followed. In one of the methods, the homopolymer or copolymer is reacted with the other component in a state either dissolved or dispersed in a solvent such as water so as to form the high molecular composite material in a liquid phase. According to the other method, the homopolymer or copolymer and the other component are mixed in a solid state or in a melted state so as to form the high molecular composite material.

When the high molecular composite material is formed in a liquid phase, a variety of solvents may be employed. As exemplary solvents, may be mentioned water, alcohols, cyclic ethers, ketones, amides, aromatic hydrocarbons, halogenated hydrocarbons, dimethylsulfoxide, N-methylpyrrolidone, chain glycols, and basic solvents as described above. The selection of a particular solvent is effected in accordance with the types of compounds, which make up each high molecular composite material, and the intended utility of the high molecular composite material.

The specific method for forming the high molecular composite material in a liquid phase is extremely simple. It is only necessary to either dissolve or suspend the homopolymer or copolymer of at least one of the N-substituted (meth)acrylamide derivatives in a solvent and then to add the other component to the resultant solution or suspension either as is or in the form of a solution. Here, the proportions of both components may vary depending on the intended properties of a composite material to be formed and cannot be defined sweepingly. However, the molar ratio of hydroxyl, carboxyl or sulfonic groups to amido groups may range from 0.0001 to 10,0000 or preferably from 0.001 to 1,000. On the other hand, the concentration of the homopolymer or copolymer may take any value so long as its solution can be mixed with a solution of the other component, and may generally range from 0.1 to 50 wt.%.

As an alternative method, certain properties of each composite material may be changed by controlling the pH to replace active hydrogen atoms of its substituent groups such as hydroxyl groups, carboxyl groups, or sulfonic groups with ammonium ions or metal ions such as alkali metal ions so that the ratio of such hydroxyl groups, carboxyl groups, or sulfonic groups to its amido groups is changed. In this case, the force maintaining the integrity of the composite material is generally reduced by such ionization. As a

further alternative method, the high molecular composite material may also be formed by mixing the other component as an ionized raw material with the homopolymer or copolymer and then adding a third component capable of forming active hydrogen atoms again, such as a strong acid component, or heating the salt of a weak base to form active hydrogen atoms again, thereby forming hydroxyl, carboxyl or sulfonic groups again. Whichever method is followed, the temperature may be within the range of -10 - +150° C or preferably 0 - +100° C.

The thus-formed high molecular composite material may take various forms depending on the combination of its components and the solvent employed for its formation. When intermolecular forces of the high molecular composite material are weak, the composite material is dissolved as a solution. In this case, the physical properties of the solution, such as viscosity, change from the original solution. Where one of the components is such a compound as forming a high molecular composite material and making itself hydrophobic like phenol, the viscosity of the solution is lowered, as a result of the formation of the high molecular composite material, compared with a solution obtained without such a compound. In the case of a compound substituted by one or more substituent groups which have been dissociated into ions like sodium benzenesulfonate, the viscosity of the resulting solution is higher compared with that of a solution obtained with a compound not substituted by such substituent groups. On the other hand, some of the homopolymers and copolymers of the N-substituted (meth)acrylamide derivatives, which homopolymers and copolymers are essential components of high molecular composite materials of this invention, have such properties as thermosensitive polymers, namely, such properties that they develop cloud when heated as aqueous solutions (the temperature at which cloud is developed will hereinafter be called "cloud point"). When such homopolymers or copolymers are used, their cloud points will obviously change as a result of formation of composite materials. In other words, the cloud point drops when the viscosity of its corresponding solution is lowered, while the cloud point rises when the viscosity is increased conversely.

When intermolecular forces of a high molecular composite material are relatively strong, the high molecular composite material may form an emulsion or may be caused to deposit in its solution upon its formation. Where the formation of the high molecular composite material takes place with a low molecular compound, the resulting high molecular composite material is in many instances dissolved in the solution. However, the high molecular composite material is in many instances caused to deposit in the solution when its formation takes place with a high molecular compound. The above-mentioned phenomena may vary depending on the types of compounds and solvent to be selected. Furthermore, the thus-formed high molecular composite material has such a property that the intermolecular forces may be controlled by changing its temperature. It is generally possible to increase the intermolecular forces by heating the composite material.

The above-described high molecular composite materials can be provided in various forms, depending on their intended utility. They may be used as they are when they are provided in state dissolved in solutions or they may be dissolved in solvents and then used as solutions when they have deposited, so that such solutions are spun into fibers, cast into films, applied to impregnate fibrous, granular or hollow materials, followed by the evaporation of the solvents to form their composite materials, or by driving off the solvents from the solutions, formed into powders which may then be melted and formed into flakes or blocks. They may also be insolubilized by treating them with light such as ultraviolet, heat or radiation or with high molecular compounds capable of forming composite materials with the homopolymers or copolymers of the N-substituted (meth)acrylamide derivatives, in the course of the above-described production processes thereof.

As a specific method for forming a high molecular composite material by mixing its components in a solid state or molten state owing to an application of heat thereto, the high molecular composite material may be formed by impregnating the homopolymer or copolymer of at least one of the N-substituted (meth)-acrylamide derivative, which homopolymer or copolymer has been produced in a solid state by the above-described method, with the other component either as is or in the form of a solution, followed optionally by removal of the solvent. This method has such a feature that the high molecular composite material can be formed while maintaining the shape of the above-used homopolymer or copolymer of the N-substituted (meth)acrylamide derivative.

As a specific method for forming a high molecular composite material by heating its components and mixing them in a melted state, the high molecular composite material may be provided by charging both components in a mixer, kneading them thoroughly and then heating and melting them, and then molding the resultant melt into desired shapes.

Specifically, the high molecular composite materials of this invention may be formed or molded into fibers by melt spinning, films by calendering, hollow articles by blow molding, and various moldings by injection or extrusion molding. The forming or molding temperature varies considerably depending on the

type of each polymer to be used, and may range from 50 - 300°C in view of its glass transition temperature.

The high molecular composite materials of this invention are formed from the homopolymers or copolymers of the N-substituted (meth)acrylamide derivatives and a wide variety of compounds which range from low molecular compounds to high molecular compounds, and are provided in various shapes depending on their intended end use. Their specific utility differs naturally depending whether they are high molecular composite materials formed with low molecular compounds or high molecular composite materials formed with high molecular compounds. In the case of composite materials formed with low molecular compounds, making use of such low molecular compounds, the resulting composite materials have such utility as agents for holding and releasing the low molecular compounds, agents for separating such substances from solutions, thermo-sensitive surfactants obtained through the formation of composite materials with ionic substances or surface-activating agents. More specifically, it is possible to provide composite materials having sustained release functions under certain specific conditions set with respect to their corresponding temperatures, and solvents, new separation systems in each of which a composite material is formed in a solution to separate its solute and the thus-formed composite material is then decomposed for its recycle by making suitable selection as to the solvent and the like, and thermo-sensitive surfactants having highly temperature-dependent surface activating capacity by controlling the formation of composite materials with ionic materials or surface activating agents depending on their corresponding temperatures. On the other hand, turning to the homopolymers or copolymers of the N-substituted (meth)-acrylamides, certain physical properties of solutions of the homopolymers or copolymers such as cloud points, viscosity and the like may be controlled by forming composite materials with low molecular compounds. When used as functional materials such as adhesives, and paints, various properties such as waterproofness may be improved by forming the homopolymers or copolymers into composite materials together with low molecular compounds.

When composite materials were formed with high molecular compounds in solutions, it is possible to control the flow charateristics and viscosity characteristics of the resultant solutions as well as the polarity of their homopolymers or copolymers. Specifically, the composite materials have utility as modifiers for water-soluble polymers such as polymeric floculants, oil-recovering polymers and paper-converting or conditioning agents. When the homopolymers or copolymers form composite materials with natural polymers such as proteins or enzymes, the homopolymers or copolymers can hold such natural polymers. Further, low or high molecular compounds containing hydroxyl groups, carboxyl groups, or sulfonic groups substituted thereto may also be allowed to co-exist in order to insolubilize such composite materials.

When the homopolymers or copolymers are formed into composite materials with synthetic polymers, high molecular composite materials having new properties unforeseeable from the starting homopolymers or copolymers may be expected. These composite materials may be dissolved generally by making suitable selection as to their solvents. They may also be melted. Accordingly, they may be formed or molded into films, fibers, various moldings. As specific utility, may be mentioned functional materials for separation such as separation membranes, injection-molded articles such as car parts and electronic and electrical parts, coating lamination films, film sheets, coating or covering materials for pipes, electrical wires and cables, sundry goods such as toys, dolls, games, and stationary goods, various adhesives such as hot melt adhesives and pressure-sensitive adhesives, heat-sealing agents, paint resins, polymeric plasticizers, optical materials, transparent materials, base materials having sustained release functions for sustained release drugs, and medical materials.

As one example of such utility of the high molecular composite materials of this invention, sustained release agents for valuable substances will hereinafter be described in detail.

With a view toward reducing side effects of pharmaceutics, agricultural chemicals and the like as well as allowing their effects to last over prolonged periods of time, a variety of sustained release methods has been studied on the basis of the concept of releasing valuable substances little by little. One approach is to make the molecular weights of such valuable substances higher. In a specific method, such substances are introduced e.g. in side chains of the polymers and are then released little by little by hydrolysis or the like. Another approach is to coat such valuable substances with a high molecular compound which is e.g. degradable in the organisms, for example, by polylactic acid and then to release the valuable substances upon degradation of the thus-coated high molecular compound. Both approaches are however accompanied by problems. For example, the former approach involves problems with respect to the manner for increasing the molecular weights while the latter approach has problems on the coating method.

Paying attention to the fact that the use of such valuable substances takes place in the presence of water, the present inventors made an investigation on the holding and release of such valuable substances by aqueous gels. As a result, those obtained by water-insolubilizing the homopolymers or copolymers of the

(meth)acrylamide derivatives, which homopolymers or copolymers pertain to the present invention, have been found to be extremely convenient.

These sustained release materials for valuable substances have two convenient properties. One of the properties is that as already mentioned above, the homopolymers or copolymers of this invention can develop intermolecular forces such as hydrogen bonds, or hydrophilic bonds with compounds substituted by groups containing active hydrogen atoms, such as carboxyl, hydroxyl, sulfonic, phosphoric and/or mercapto groups, or compounds containing hydrophobic residual groups substituted thereto, whereby to form composite materials. Furthermore, these intermolecular forces can be enhanced when heated.

The other property can be brought about by water-insolubilizing the homopolymers or copolymers. Namely, it is the property that the water-insolubilized homopolymers or copolymers absorb and hold water upon contact with aqueous solutions but when heated, shrink and release water even in the presence of a large excess of water. The homopolymers or copolymers are caused to either shrink or swell depending whether their temperatures are high or low. The holding and release of substances can thus be controlled by changing the temperature while making use of these two properties.

The holding and release of valuable substances are effected by using the homopolymers or copolymers of this invention, which have the above-described properties. They are however practiced in different ways depending on the type of each valuable substance. In the case of compounds substituted by groups containing active hydrogen atoms, such as carboxyl, hydroxyl, sulfonic, phosphoric and/or mercapto groups or compounds containing hydrophobic residual groups substituted thereto, which compounds can develop intermolecular forces such as hydrogen bonds, or hydrophobic bonds with the homopolymers or copolymers, their holding and release can be effected with ease by controlling the temperatures of the homopolymers or copolymers. As specific examples of the above-described compounds, may be mentioned proteins, enzymes, amino acids, nucleic acids, polysaccharides, foods, antibiotics, a variety of physiologically-active substances, phenols, alcohols, aliphatic carboxylic acids, aromatic carboxylic acids, heterocyclic carboxylic acids, aliphatic sulfonic acids, aromatic sulfonic acids, mono- and di-esters of phosphoric acid, polyphosphoric acid esters such as ADP and ATP, surfactants, aromatic compounds, coloring matter, perfumes. These compounds may be held at high temperatures and released at low temperatures.

Where valuable substances are water-soluble low molecular compounds exemplified by fertilizers such as ammonium sulfate, urea and ammonium phosphates, the swelling and shrinking properties of the homopolymers or copolymers are used. As a simple holding method, it is only required to bring their aqueous solutions into contact with the homopolymers or copolymers so that the valuable substances are taken as their solutions into the homopolymers or copolymers. The concentrations of the solutions may be at any levels so long as they are below the concentrations of their respective saturated solutions. Where there are chances for the resultant composite materials to be brought into water such as rainwater, the low molecular compounds taken in the homopolymers or copolymers are, as a releasing method, dissolved out as water diffuses into the homopolymers or copolymers. Where there are no chances for the resultant composite material to be brought into water, it is necessary only to heat the homopolymers or copolymers so that they are shrunk to release the low molecular compounds.

Where there are chances for the homopolymers or copolymers to be brought into contact with water, it is required, as a simpler releasing method, only to mix powders of the low molecular compounds with their corresponding homopolymers or copolymers in advance. When water is caused to gather around the resultant mixtures after a rainfall, the powders are dissolved in the water while the homopolymers or copolymers are swollen by the water. As a result, such compounds are held in their corresponding homopolymers or copolymers. As another method, low molecular compounds may be held in the homopolymers or copolymers by effecting the polymerization of the homopolymers or copolymers in solvents free of the low molecular compounds, which are to be held, by solution polymerization which is one of the above-described preparation methods, adding the low molecular compounds either before or after the polymerization, driving off the solvents from the solutions and then heat-treating the resultant mixtures to hold the low molecular compounds in the homopolymers or copolymers. Their release takes place little by little whenever the composite materials are brought into contact with water.

In the above case, the influence of temperature to the holding and release varies depending how the holding and release takes place. When the release of the low molecular compounds takes place, for example, as a result of diffusion of the low molecular compounds through their associated homopolymers or copolymers, the diffusion velocities are lowered at high temperatures because the homopolymers or copolymers are shrunk at high temperatures. At low temperatures, the homopolymers or copolymers are caused to swell and the diffusion velocities are hence increased. As a result, the low molecular compounds are held at high temperatures and released at low temperatures.

Where materials, which are to be released, are held in gel-like polymers, they are held at low temperatures as the gel-like polymers are swollen at the low temperatures and are released at high temperatures as the gel-like polymers are shrunk at the high temperatures.

The above-described valuable substances are generally held at high temperatures and released at low temperatures. The holding temperature is lower than the thermal modification temperature of each substance and gives the maximum holding volume for the particular substance. It changes depending on the type of each homopolymer or copolymer and the type of each compound to be held, but is generally within the range of 10 - 100 °C.

On the other hand, the releasing temperature is determined by the releasing velocity. The releasing velocity increases as the temperature decreases. It is generally within the range of -10 - +80 °C. When the homopolymer or copolymer of this invention is caused to hold a valuable substance at a high temperature in an aqueous solution of the valuable substance, the resultant composite material may be used as is in the aqueous solution. Alternatively, the composite material may be separated by filtration and stored either as is or in a dry state. The holding volumes of these compounds may vary depending on the compositions of the homopolymers or copolymers and the compounds to be held. They may usually be within the range of 1 - 1,000 mg/g-homopolymer or copolymer. By lowering the temperatures of the composite materials, the substances can be released completely.

It is also possible to carry out the holding and release by controlling the pH of an aqueous solution. Namely, in the case of an ampholytic electrolyte such as amino acid or protein, its holding can be effected preferentially at pHs below the isoelectric point of the ampholytic electrolyte on the acidic side. On the alkaline side, its release can be effected preferentially at pHs above the isoelectric point of the ampholytic electrolyte. In other words, the holding and release can be controlled by temperature and pH.

After releasing the held substance in the above manner, the homopolymer or copolymer may be used again as is. Alternatively, after the release, it may further be brought into contact with chilled water or an alkaline solution and washed thoroughly therewith so that it is regenerated. In the manner described above, the above-described substance may also be integrated with the homopolymer or copolymer of this invention, for example, by coating the former on the latter and then released at a desired temperature or pH.

Turning next to the selection as to the composition of the homopolymer or copolymer, the optimum composition changes depending on each substance to be held. It is therefore preferred to conduct a test in advance whenever the homopolymer or copolymer is employed to hold a substance. As one measure for the selection, it is generally preferred to use a copolymer having relatively low hydrophobicity when holding a substance having relatively high hydrophobicity, and vice versa.

In the above case, more selective holding and release become feasible by the use of a copolymer with an ionic monomer as the copolymer, because the use of such an ionic monomer permits introduction of either one of the ionic properties, namely, either cationic property or anionic property into the resultant copolymer and the ionic interaction can also be used upon holding various substances. When a copolymer with an N-(ω-glycidoxyalkyl)acrylamide such as N,N-diglycidylacrylamide or N-(4-glycidoxybutyl)acrylamide is used, highly reactive epoxy groups can be introduced in the resultant copolymer. By reacting an amino acid, a protein such as an antigen, antibody or enzyme or a coloring matter with the epoxy groups, both affinity and interaction can be used in combination for holding various substances, thereby permitting more selective holding and release.

The present invention is further illustrated by the following examples.

Example 1:

[Preparation of polymer]

Added to and dissolved in 50 ml of N,N-dimethylformamide were 12.5 g of N-acryloylpyrrolidine (hereinafter abbreviated as "N-APy") and 0.164 g of azobisisobutyronitrile. After sweeping the contents with nitrogen gas in a reactor, they were polymerized at 50 °C for 3 hours. After completion of the polymerization, the polymerization mixture was poured into ethyl ether to deposit the resultant N-APy polymer. It was collected by filtration and then dried, thereby obtaining the N-APy polymer. Its yield was 92%.

[Measurement of viscosity of solution]

The above-prepared N-APy polymer was added to an aqueous phenol solution having a concentration of 0.19% in such an amount that its concentration reached 0.5%. The viscosity of the resultant solution was

measured by an Ubbelohde's viscometer at 25°C and 35°C.

In the same manner, the viscosity of an aqueous solution of the N-APy which solution was free of phenol was also measured. The ratio in reduced viscosity of the aqueous phenol-containing solution to the aqueous phenol-free solution (hereinafter abbreviated as "viscosity ratio". viscosity ratio = reduced viscosity in the presence of phenol/reduced viscosity in the absence of phenol) was 0.90 at 25°C and 0.81 at 35°C. From these results, it was indicated that the N-APy polymer formed a composite material in the phenol-containing aqueous solution and as a result, the viscosity of the aqueous solution was lowered and at the same time, the intermolecular forces of the composite material became stronger as the temperature increased.

Examples 2 - 14:

In the same manner as in Example 1 except that the solutes given in Table 1 were used respectively at the concentrations shown in Table 1, the viscosities of aqueous solutions of the N-APy polymer were measured and viscosity ratios were then calculated. Results are shown in Table 1.

In Examples 3 and 5 of Table 1, composite materials were caused to deposit from their corresponding aqueous solutions and the aqueous solutions were thus clouded.

Table 1

| Example | Solute | | Viscosity ratio | |
|---|---|---|---|---|
| | Compound | Conc. (%) | 25°C | 35°C |
| 2 | 2-naphthol | 0.014 | 0.85 | 0.81 |
| 3 | 2-naphthol | 0.036 | clouded | |
| 4 | benzoic acid | 0.24 | 0.89 | 0.81 |
| 5 | benzoic acid | 0.37 | clouded | |
| 6 | phthalic acid | 0.33 | 0.87 | 0.85 |
| 7 | benzoquinone | 0.10 | 0.93 | 0.98 |
| 8 | sodium benzoate | 0.29 | 1.04 | 1.13 |
| 9 | sodium benzoate | 0.58 | 1.01 | 1.15 |
| 10 | sodium benzenesulfonate | 0.72 | 1.03 | 1.18 |
| 11 | sodium benzenesulfonate | 1.44 | 1.03 | 1.22 |
| 12 | sodium β-naphthalene sulfonate | 0.92 | 1.07 | 1.27 |
| 13 | ethanol | 0.46 | 1.00 | 1.04 |
| 14 | n-butanol | 0.74 | 1.01 | 1.04 |

Example 15:

[Measurement of cloud point]

Benzoic acid was added to a 0.5% aqueous solution of the N-APy polymer to a concentration of 0.098%. After converting the mixture into a homogeneous aqueous solution, the aqueous solution was placed in the cell of a spectrophotometer, and the temperature of the cell was raised by circulating water and its transmittance was measured at 420 nm. The middle temperature between the maximum transmittance and the minimum transmittance was determined as a cloud point from the measurement data. It was 46° C. The clouded solution became colorless and clear upon its cooling.

Examples 16 - 22:

The cloud points of a 0.5% aqueous solution of the N-APy polymer were measured at the benzoic acid concentrations given in Table 2 in exactly the same manner as in Example 15. At each of the concentrations, the clouded solution became colorless and clear upon its cooling.

Table 2

| Ex. | Conc. of benzoic acid (%) | Cloud point (°C) |
|---|---|---|
| 16 | 0.12 | 44 |
| 17 | 0.18 | 42 |
| 18 | 0.24 | 37 |
| 19 | 0.31 | 30 |
| 20 | 0.34 | 22 |
| 21 | 0.35 | 16 |
| 22 | 0.37 | 0 |

Example 23:

When an aqueous solution containing 0.095 g of phenol dissolved in 2 ml of water was added to 5 ml of a 5% aqueous solution of the N-APy polymer prepared by aqueous solution polymerization and the resultant mixture was stirred, the solution was emulsified. The average size of droplets in the emulsion was measured by the simple turbidity method. It was found to be 0.49 µm. When the emulsion was progressively diluted with water, it turned to a colorless and clear aqueous solution.

Example 24:

When 40 ml of a 2.5% solution of p-isopropenylphenol(hereinafter abbreviated as "PIPE")-acrylonitrile (hereinafter abbreviated as "AN") copolymer (trade mark: "Milex SP 2,000"; product of Mitsui-Toatsu Chemicals Incorporated; 70% PIPE - 30% AN) in methyl ethyl ketone was added to 26 ml of a 2.5% solution of the N-APy polymer in acetone, a yellow precipitate was formed. The yield of the precipitate was 1.59 g.

Example 25:

When 40 ml of a 2.5% solution of a PIPE-AN-styrene(hereinafter abbreviated as "St") copolymer (trade mark: "Milex SP 6,000"; product of Mitsui-Toatsu Chemicals Incorporated; 30% PIPE - 37% AN - 33% St) in methyl ethyl ketone was added to 11 ml of a 2.5% solution of the N-APy polymer in acetone, a yellow precipitate was formed. The yield of the precipitate was 1.19 g.

Example 26:

To a homogeneous aqueous solution obtained by adding 7 ml of a 1% aqueous solution of ammonium polyacrylate to 10 ml of a 1% aqueous solution of the N-APy polymer, was added 2 ml of a 1N aqueous hydrochloric acid solution. The formation of a composite material was observed at the interface between both aqueous solutions simultaneously with the addition of the aqueous hydrochloric acid solution. The composite material was separated in the form of a white film. The yield of the composite material was 0.15 g. This composite material was not dissolved in water but was dissolved in N,N-dimethylformamide.

Example 27:

A composite material was formed and obtained in the form of a white film in exactly the same manner as in Example 26 except that 10 ml of a 1% aqueous solution of N-n-propylacrylamide (hereinafter abbreviated as "N-PA") polymer and 8 ml of a 1% aqueous solution of ammonium polyacrylate were used. The yield of the composite material was 0.16 g.

Example 28:

A composite material was formed in exactly the same manner as in Example 26 except that 10 ml of a 1% aqueous solution of N,N-dimethylacrylamide polymer and 8 ml of a 1% aqueous solution of ammonium polyacrylate were used. The composite material was obtained as an aqueous, white and clear gel having expandable and shrinkable elasticity.

Example 29:

A clouded aqueous solution was obtained by forming a composite material in exactly the same manner as in Example 26 except that 10 ml of a 1% aqueous solution of an acrylamide polymer and 8 ml of a 1% aqueous solution of ammonium polyacrylate were used. The transmittance of the aqueous solution was measured at 420 nm. It was 4.3%.

Example 30:

A clouded aqueous solution was obtained by forming a composite material in exactly the same manner as in Example 26 except that 10 ml of a 1% aqueous solution of a methacrylamide polymer and 8 ml of a 1% aqueous solution of ammonium polyacrylate were used. The transmittance of the aqueous solution was measured at 420 nm. It was 3.3%.

Example 31:

Five milliliters of a 7% aqueous solution of an N-n-propylacrylamide polymer and 3 ml of a 4% aqueous solution of ammonium polyacrylate were mixed and placed in a syringe. The above-mixed aqueous solution was then extruded from the needle of the syringe into a 0.1 N aqueous solution of hydrochloric acid of 50°C, thereby obtaining thread-like white material. It was then washed with water and immersed in distilled water. It was caused to swell with water into an elastic string-like gel.

Example 32:

Dissolved in 1,170 g of distilled water were 124.95 g of N-acryloylpyrrolidine, 374.85 g of N-acryloylpiperidine and 10.0 g of N,N'-methylenebisacrylamide to obtain an aqueous solution of the mixture of N-acryloylpyrrolidine, N-acryloylpiperidine and N,N'-methylenebisacrylamide. After cooling the aqueous solution to 10°C, it was transferred to a 2-liter, Dewar flask made of stainless steel. It was bubbled with nitrogen gas for 1 hour by feeding the nitrogen gas at a flow velocity of 1 liter/min. through a ball filter. Thereafter, a solution containing 2.55 g of ammonium persulfate dissolved in 10 g of distilled water and another solution containing 1.16 g of sodium hydrogen sulfite dissolved in 10 g of distilled water were simultaneously added to the above aqueous solution and the resultant aqueous solution was adiabatically polymerized. The resultant gel was chopped into small pieces and then dried. It was thereafter crushed and a 20-100 mesh fraction was collected as a sample. Two grams of the sample powder were added to 100 ml of an aqueous solution which contained 310 ppm of phenol. After stirring the resultant mixture at 40°C for 15 minutes, it was filtered through a glass filter to obtain 3.8 g of a swollen gel. By measuring the phenol concentration of the filtrate, it was found that the swollen gel held 16.0 mg of the phenol. Thereafter, 0.475 g

of the swollen gel (the amount of held phenol: 2.0 mg) was packed in a glass column having an inner diameter of 1.0 cm and a length of 10 cm. Distilled water was caused to pass at 0.5° C and a flow velocity of 3.5 ml/min. through the column. After fourty five minutes, the phenol concentration of the thus-passed solution reached below its detectable lower limit. The phenol concentration of the above-obtained solution was measured. It indicated that 99% of the phenol, which had been held in the swollen gel, had been released.

Incidentally, the phenol concentrations were each determined by measuring the absorbance of its corresponding solution at 254 nm.

Example 33:

By using 0.475 g of the swollen gel which had been obtained in Example 32 and contained 2.0 mg of phenol, the releasing time and released amount were measured at 40° C in the same manner as in Example 32. After 4 hours, the phenol concentration of the thus-passed solution reached below the detectable lower limit. However, the amount of the released phenol was 78% of its initially-held amount.

Examples 34 - 41:

With the copolymer compositions given in Table 3, sample powders were obtained by effecting their polymerization and grinding in the same manner as in Example 32. By using those sample powders, swollen gels holding their corresponding substances given in Table 3 were obtained in the same manner as in Example 32. By using the swollen gels, their releasing times and released percentages were measured at various temperatures. Results are shown in Table 3.

Table 3

| Ex. | Swollen gel | | Held substance | | Releasing temp. (°C) | Releasing time (hrs.) | Released percentage (%) |
|---|---|---|---|---|---|---|---|
| | Composition* (wt.%) | Amount (g) | Name | Held Amount | | | |
| 34 | N-AcPy/N-AcPi/MBA (73.5) (24.5) (2.0) | 0.74 | benzoic acid | 1.3 mg | 0.5 | 0.5 | 97 |
| 35 | N-AcPy/N-AcPi/MBA (73.5) (24.5) (2.0) | 0.74 | benzoic acid | 1.3 mg | 60 | 3.5 | 82 |
| 36 | N-AcPy/MBA (98.0) (2.0) | 0.60 | decaethyleneglycol mono(p-nonylphenyl) ether | 2.3 mg | 0.5 | 1.0 | 98 |
| 37 | N-AcPy/MBA (98.0) (2.0) | 0.60 | decaethyleneglycol mono(p-nonylphenyl) ether | 2.3 mg | 80 | 4.5 | 79 |
| 38 | N-AcPy/N-AcPi/MBA (49.0) (49.0) (2.0) | 0.50 | chloramphenycol | 1.3 mg | 0.5 | 1.5 | 96 |
| 39 | N-AcPy/N-AcPi/MBA (49.0) (49.0) (2.0) | 0.50 | chloramphenycol | 1.3 mg | 60 | 5.0 | 75 |
| 40 | N-AcPy/N-AcPi/MBA (49.0) (49.0) (2.0) | 0.55 | bovine serum albumin | 1.9 mg | 0.5 | 0.75 | 96 |
| 41 | N-AcPy/N-AcPi/MBA (49.0) (49.0) (2.0) | 0.55 | bovine serum albumin | 1.9 mg | 30 | 4.5 | 81 |

* N-AcPy: N-acryloylpyrrolidine.
N-AcPi: N-acryloylpiperidine.
MBA: N,N'-methylenebisacrylamide.

Examples 42 and 43:

With the copolymer compositions given in Table 4, sample powders were obtained by effecting their polymerization and grinding in the same manner as in Example 32. By using the sample powders, swollen

gels holding their corresponding substances shown in Table 4 were obtained in the same manner as in Example 32 except that the pHs of the aqueous solutions of the substances were adjusted to pH 3 with hydrochloric acid. By using the swollen gels, their releasing times and released percentages were measured at various temperatures in the same manner as in Example 32 except that the pH of the passed distilled water was adjusted to pH 3 with hydrochloric acid. Results are given in Table 4.

Examples 44 and 45:

By using the sample powder obtained in Example 32, the releasing time and released percentage of the substance given in Table 4 were measured at various temperatures in the same manner as in Example 32. Results are given in Table 4.

Examples 46 - 49:

By using the swollen gels obtained in Examples 42 - 45, the releasing times and released percentages of the substances shown in Table 4 were measured at various temperatures in the same manner as in Example 32 except that the pH of the passed distilled water was adjusted to pH 8 with sodium hydroxide. Results are shown in Table 4.

Table 4

| Ex. | Swollen gel | | Held substance | | Releasing temp. (°C) | Releasing time (hrs.) | Released percentage (%) |
|---|---|---|---|---|---|---|---|
| | Composition* (wt.%) | Amount (g) | Name | Held Amount | | | |
| 42 | N-PrAM/MBA (99.5) (0.5) | 0.60 | DL-phenylalanine | 2.5 mg | 0.5 | 1.0 | 98 |
| 43 | N-PrAM/MBA (99.5) (0.5) | 0.60 | DL-phenylalanine | 2.5 mg | 80 | 5.0 | 82 |
| 44 | N-AcPy/N-AcPi/MBA (24.5) (73.5) (2.0) | 0.45 | Methyl Orange | 0.2 mg | 0.5 | 1.5 | 95 |
| 45 | N-AcPy/N-AcPi/MBA (24.5) (73.5) (2.0) | 0.45 | Methyl Orange | 0.2 mg | 40 | 5.5 | 80 |
| 46 | N-PrAM/MBA (99.5) (0.5) | 0.60 | DL-phenylalanine | 2.5 mg | 0.5 | 0.5 | 99 |
| 47 | N-PrAM/MBA (99.5) (0.5) | 0.60 | DL-phenylalanine | 2.5 mg | 80 | 3.5 | 88 |
| 48 | N-AcPy/N-AcPi/MBA (24.5) (73.5) (2.0) | 0.45 | Methyl Orange | 0.2 mg | 0.5 | 1.0 | 97 |
| 49 | N-AcPy/N-AcPi/MBA (24.5) (73.5) (2.0) | 0.45 | Methyl Orange | 0.2 mg | 40 | 4.0 | 85 |

* N-PrAM: N-n-propylacrylamide.

Example 50:

After adding 2 g of the sample powder obtained in Example 36 to 100 ml of a 0.2% aqueous solution of ammonium sulfate and stirring the resultant mixture at room temperature for 15 minutes, the resulting liquid

mixture was filtered by using a glass filter to obtain 16.4 g of a swollen gel (the amount of held ammonium sulfate: 28.8 mg). By using 2.0 g of the swollen gel (the amount of held ammonium sulfate: 3.5 mg), the releasing time and released percentage of ammonium sulfate were measured at various temperatures in the same manner as in Example 32, resulting in 83% at 0.5 °C in 4 hours and 97% at 80 °C in 1.5 hours. By the way, the concentrations of ammonium sulfate were determined by measuring the electric conductivity of the liquids.

Examples 51 - 56:

By using dry gel powders which had been obtained by drying the swollen gels, obtained in Examples 34, 36 and 38, overnight at 60 °C, the releasing times and releasing percentages of the substances given in Table 5 were measured in the same manner as in Example 32. Results are shown in Table 5.

Table 5

| Ex. | Dry gel powder Composition (wt.%) | Dry gel powder Amount (g) | Held substance Name | Held substance Held Amount | Releasing temp. (°C) | Releasing time (hrs.) | Released percentage (%) |
|---|---|---|---|---|---|---|---|
| 51 | N-AcPy/N-AcPi/MBA (73.5) (24.5) (2.0) | 0.25 | benzoic acid | 1.4 mg | 0.5 | 0.75 | 95 |
| 52 | N-AcPy/N-AcPi/MBA (73.5) (24.5) (2.0) | 0.25 | benzoic acid | 1.4 mg | 60 | 5.0 | 79 |
| 53 | N-AcPy/MBA (98.0) (2.0) | 0.20 | decaethyleneglycol mono(p-nonylphenyl) ether | 2.1 mg | 0.5 | 1.5 | 97 |
| 54 | N-AcPy/MBA (98.0) (2.0) | 0.20 | decaethyleneglycol mono(p-nonylphenyl) ether | 2.1 mg | 80 | 6.0 | 77 |
| 55 | N-AcPy/N-AcPi/MBA (49.0) (49.0) (2.0) | 0.25 | chloramphenycol | 1.3 mg | 0.5 | 2.0 | 96 |
| 56 | N-AcPy/N-AcPi/MBA (49.0) (49.0) (2.0) | 0.25 | chloramphenycol | 1.3 mg | 60 | 6.0 | 71 |

Examples 57 - 60:

By using dry gel powders which had been obtained by drying the swollen gels, obtained in Examples 42 and 44, overnight at 60° C, the releasing times and releasing percentages of the substances given in

Table 6 were measured in the same manner as in Example 42. Results are shown in Table 6.

Examples 61 - 64:

By using dry gel powders obtained in Examples 57 and 59, the releasing times and releasing percentages of the substances given in Table 6 were measured in the same manner as in Example 46. Results are shown in Table 6.

Table 6

| Ex. | Dry gel powder Composition* (wt.%) | Dry gel powder Amount (g) | Held substance Name | Held substance Held Amount | Releasing temp. (°C) | Releasing time (hrs.) | Released percentage (%) |
|---|---|---|---|---|---|---|---|
| 57 | N-PrAM/MBA (99.5) (0.5) | 0.25 | DL-phenylalanine | 2.6 mg | 0.5 | 1.5 | 95 |
| 58 | N-PrAM/MBA (99.5) (0.5) | 0.25 | DL-phenylalanine | 2.6 mg | 80 | 7.0 | 80 |
| 59 | N-AcPy/N-AcPi/MBA (24.5) (73.5) (2.0) | 0.25 | Methyl Orange | 0.20 mg | 0.5 | 2.0 | 94 |
| 60 | N-AcPy/N-AcPi/MBA (24.5) (73.5) (2.0) | 0.25 | Methyl Orange | 0.20 mg | 40 | 7.0 | 77 |
| 61 | N-PrAM/MBA (99.5) (0.5) | 0.25 | DL-phenylalanine | 2.6 mg | 0.5 | 0.75 | 98 |
| 62 | N-PrAM/MBA (99.5) (0.5) | 0.25 | DL-phenylalanine | 2.6 mg | 80 | 4.5 | 86 |
| 63 | N-AcPy/N-AcPi/MBA (24.5) (73.5) (2.0) | 0.25 | Methyl Orange | 0.20 mg | 0.5 | 1.5 | 94 |
| 64 | N-AcPy/N-AcPi/MBA (24.5) (73.5) (2.0) | 0.25 | Methyl Orange | 0.20 mg | 40 | 5.5 | 81 |

Example 65:

By using 0.25 g of dry gel powder (the amount of held ammonium sulfate: 3.6 mg) obtained by drying the swollen gel, obtained in Example 50, overnight at 60 °C, the releasing time and releasing percentage of

ammonium sulfate were measured at various temperatures in the same manner as in Example 50, resulting in 84% at 0.5 °C in 4.25 hours and 96% at 80 °C in 1.5 hours.

**Claims**

**1.** A high molecular composite material for releasing a water soluble organic compound comprising
(A) a water soluble organic compound selected from:
(a) compounds containing active hydrogen atoms, which are substituted by one or more hydroxyl, carboxyl, sulfonic acid, phosphoric acid or mercapto groups; and
(b) compounds containing a hydrophobic group, which contain, as their hydrophobic groups, cyclic structures such as aromatic rings and long-chain hydrocarbon radicals, and
(B) a water insolubilized polymeric adsorbent material selected from:
(a) a homopolymer of a monomer selected from N-alkyl- or N-alkylene-substituted (meth)-acrylamides represented by the following general formula (I) or (II):

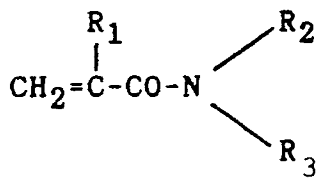

(I)

wherein $R_1$ is a hydrogen atom or methyl group, $R_2$ is a hydrogen atom or a methyl or ethyl group and $R_3$ is a methyl, ethyl or propyl group, or

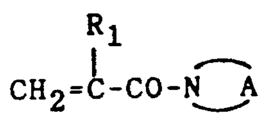

(II)

wherein $R_1$ is a hydrogen atom or methyl group and A is a member selected from the group consisting of $-(CH_2)_n-$ or $-(CH_2)_2-O-(CH_2)_2-$ wherein n is an integer of from 4 to 6;
(b) a first copolymer of two or more monomers selected from said (meth)acrylamides, and
(c) a second copolymer of at least one monomer selected from said (meth)acrylamides and one or more monomers other than said (meth)acrylamides and copolymerizable therewith.

**2.** A high molecular composite material according to claim 1, wherein the active hydrogen atoms are present in the form of (1) one or more hydroxyl groups substituted to an aromatic ring or an aliphatic hydrocarbon radical or (2) one or more carboxyl groups substituted to an aromatic hydrocarbon radical or an aliphatic hydrocarbon radical.

**3.** A high molecular composite material according to claim 1, wherein compounds containing a hydrophobic group are selected from surfactants, proteins, physiologically-active substances and colorants.

**4.** A high molecular composite material according to claim 1, wherein the water soluble organic compound contains one or more hydroxyl groups substituted to an aromatic ring, the water soluble organic compound for example being selected from phenol, cresol, xylenol, hydroquinone, benzenetriol, salicyl alcohol, naphthol, anthrol, nonylphenol, carvacrol, vinylphenol, isopropenylphenol, diphenylphenol, biphenyldiol, napthylphenol, phenylnaphthol, p-cumlyphenol and 4,4'-dihydroxydiphenylsulfon,

**5.** A high molecular composite material according to claim 1, wherein the water soluble organic compound contains one or more hydroxyl groups substituted to an aliphatic hydrocarbon radical, the organic compound is a saturated aliphatic alcohol.

**6.** A high molecular composite material according to claim 3, wherein the water soluble organic compound

is a surfactant selected from anionic, nonionic, cationic and amphoteric surfactants.

**7.** A high molecular composite material according to claim 3, wherein the water soluble organic compound is a protein having a molecular weight in the range of from 1,000 to 1,000,000.

**8.** A high molecular composite material according to claim 3, wherein the water soluble organic compound is a physiologically-active substance selected from antibiotics, hypnosedatives, antiepileptics, antipyretics, analgesics, antiphlogistics, mental and nervous drugs, obtundents, muscle relaxants, autonomic drugs, sense organ drugs, antihistamines, cardiotonics, antiarrhythmics, hypotensor and diuretic drugs, vasodilators, therapeutic drugs for arteriosclerosis, anhelation drugs, antibechic and expectorant drugs, digestive organic drugs, adrenal hormone preparations, sex hormone and other hormone preparations, bacteriocidal and disinfectant agents, vitamin preparations, nourishing, antasthenic and alterative agents, anticoagulants, antihemorrhagics, liver drugs, therapeutic drugs for intoxication, enzyme preparations, antidiabetics, antimalignant tumor drugs, chemotherapeutic drugs, biological preparations, anthelmintics, antiprotozoals and narcotics.

**9.** A high molecular composite material according to claim 3, wherein the water soluble organic compound is a colorant selected form dyes, organic pigments, coloring agents and titration indicators.

**10.** A high molecular composite material according to claim 1, wherein the acrylamide monomer is selected from N-acryloyl-pyrrolidine and N-acryloyl piperdine.

**11.** A method for releasing a water soluble organic compound, which comprises the steps of:
(1) forming a high molecular releasing material comprising
(A) a water soluble organic compound selected from:
(a) compounds containing active hydrogen atoms, which are substituted by one or more hydroxyl, carboxyl, sulfonic acid, phosphoric acid or mercapto groups; and (b) compounds containing a hydrophobic group, which contain, as their hydrophobic groups, cyclic structures such as aromatic rings and long-chain hydrocarbon radicals, and
(B) a water insolubilized polymeric adsorbent material selected from:
(a) a homopolymer of a monomer selected from N-alkyl- or N-alkylene-substituted (meth)-acrylamides represented by the following general formula (I) or (II):

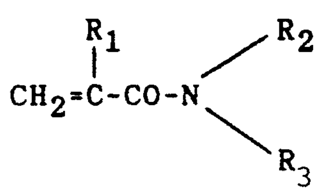

(I)

wherein $R_1$ is a hydrogen atom or methyl group, $R_2$ is a hydrogen atom or a methyl or ethyl group, and $R_3$ is a methyl, ethyl or propyl group, or

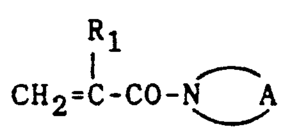

(II)

wherein $R_1$ is a hydrogen atom or methyl group and A is a member selected from the group consisting of $-(CH_2)_n-$ or $-(CH_2)_2-O-(CH_2)_2-$ wherein n is an integer of from 4 to 6;
(b) a first copolymer of two or more monomers selected from said (meth)acrylamides, and
(c) a second copolymer of at least one monomer selected from said (meth)acrylamides and one or more monomers other than said (meth)acrylamides and copolymerizable therewith; and
(2) subsequently contacting said high molecular releasing material containing water soluble organic compounds with an aqueous medium.

## Revendications

1. Matériau composite de masse moléculaire élevée, destiné à la libération d'un composé organique hydrosoluble, comprenant
(A) un composé organique hydrosoluble choisi parmi :
(a) des composés contenant des atomes d'hydrogène actif, qui sont substitués par un ou plusieurs groupes hydroxyle, carboxyle, acide sulfonique, acide phosphorique ou mercapto ; et
(b) des composés contenant des groupes hydrophobes, qui contiennent, comme groupes hydrophobes, des structures cycliques telles que des cycles aromatiques et des radicaux hydrocarbonés à longue chaîne, et
(B) un matériau adsorbant polymère rendu insoluble dans l'eau, choisi parmi :
(a) un homopolymère d'un monomère choisi parmi les (méth)acrylamides N-alkyl- ou N-alkylène-substitués, représentés par la formule générale (I) ou (II) suivante :

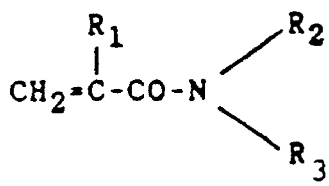

(I)

dans laquelle $R_1$ représente un atome d'hydrogène ou un groupe méthyle, $R_2$ représente un atome d'hydrogène ou un groupe méthyle ou éthyle, et $R_3$ représente un groupe méthyle, éthyle ou propyle, ou

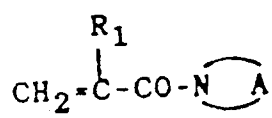

(II)

dans laquelle $R_1$ représente un atome d'hydrogène ou un groupe méthyle et A est choisi dans le groupe constitué par $-(CH_2)_n-$ , ou $-(CH_2)_2-O-(CH_2)_2-$ , n étant un nombre entier de 4 à 6 :
(b) un premier copolymère de deux ou plusieurs monomères choisis parmi lesdits (méth)-acrylamides, et
(c) un second copolymère d'au moins un monomère choisi parmi lesdits (méth)acrylamides et un ou plusieurs monomères autres que lesdits (méth)acrylamides et copolymérisables avec eux.

2. Matériau composite de masse moléculaire élevée, selon la revendication 1, dans lequel les atomes d'hydrogène actif sont présents sous la forme (1) d'un ou de plusieurs groupes hydroxyle substitués sur un cycle aromatique ou sur un radical hydrocarboné aliphatique ou (2) d'un ou de plusieurs groupes carboxyle substitués sur un radical hydrocarboné aromatique ou sur un radical hydrocarboné aliphatique.

3. Matériau composite de masse moléculaire élevée, selon la revendication 1, dans lequel les composés contenant un groupe hydrophobe sont choisis parmi les tensioactifs, les protéines, les substances physiologiquement actives et les colorants.

4. Matériau composite de masse moléculaire élevée, selon la revendication 1, dans lequel le composé organique hydrosoluble contient un ou plusieurs groupes hydroxyle substitués sur un cycle aromatique, le composé organique hydrosoluble étant choisi par exemple parmi le phénol, le crésol, le xylénol, l'hydroquinone, le benzènetriol, l'alcool salicylique, le naphtol, l'anthrol, le nonylphénol, le carvacrol, le vinylphénol, l'isopropénylphénol, le diphénylphénol, le biphényldiol, le naphtylphénol, le phénylnaphtol, le p-cumylphénol et le 4,4'-dihydroxydiphénylsulfone.

5. Matériau composite de masse moléculaire élevée, selon la revendication 1, dans lequel le composé organique hydrosoluble contient un ou plusieurs groupes hydroxyle substitués sur un radical hydrocarboné aliphatique, le composé organique étant un alcool aliphatique saturé.

6. Matériau composite de masse moléculaire élevée, selon la revendication 3, dans lequel le composé organique hydrosoluble est un tensioactif choisi parmi les tensioactifs anioniques, non ioniques, cationiques et amphotères.

7. Matériau composite de masse moléculaire élevée, selon la revendication 3, dans lequel le composé organique hydrosoluble est une protéine ayant une masse moléculaire dans la gamme de 1 000 à 1 000 000.

8. Matériau composite de masse moléculaire élevée, selon la revendication 3, dans lequel le composé organique hydrosoluble est une substance physiologiquement active choisie parmi les antibiotiques, les hypnosédatifs, les antiépileptiques, les antipyrétiques, les analgésiques, les antiphlogistiques, les médicaments utilisés pour le traitement des maladies mentales et du système nerveux, les drogues destinées à calmer une irritation (obtundents), les relaxants musculaires, les drogues d'autonomie, les médicaments destinés au traitement des organes sensoriels, les antihistaminiques, les cardiotoniques, les antiarythmiques, les hypotenseurs et les diurétiques, les vasodilatateurs, les médicaments destinés au traitement de l'artériosclérose, les drogues d'anhélation, les médicaments antibéchiques et les expectorants, les médicaments destinés au traitement des organes digestifs, les préparations hormonales à base d'adrénaline, les préparations hormonales à base d'hormone sexuelle et autres, les agents bactéricides et désinfectants, les préparations vitaminées, les agents nutritifs, antiasthéniques et altératifs, les anticoagulants, les antihémorragiques, les médicaments destinés au traitement du foie, les médicaments destinés au traitement des intoxications, les préparations à base d'enzymes, les antidiabétiques, les médicaments destinés au traitement des tumeurs malignes, les drogues utilisées en chimiothérapie, les préparations biologiques, les antihelmintiques, les antiprotozoaires et les narcotiques.

9. Matériau composite de masse moléculaire élevée, selon la revendication 3, dans lequel le composé organique hydrosoluble est un colorant choisi parmi les teintures, les pigments organiques, les agents colorants et les indicateurs de titrimétrie.

10. Matériau composite de masse moléculaire élevée, selon la revendication 1, dans lequel le monomère acrylamide est choisi parmi la N-acryloyl-pyrrolidine et la N-acryloyl-pipéridine.

11. Procédé pour la libération d'un composé organique hydrosoluble, comprenant les étapes consistant à :
(1) former un matériau libérateur de masse moléculaire élevée, comprenant
(A) un composé organique hydrosoluble choisi parmi :
(a) des composés contenant des atomes d'hydrogène actif, qui sont substitués par un ou plusieurs groupes hydroxyle, carboxyle, acide sulfonique, acide phosphorique ou mercapto ; et (b) des composés contenant des groupes hydrophobes, qui contiennent, comme groupes hydrophobes, des structures cycliques telles que des cycles aromatiques et des radicaux hydrocarbonés à longue chaîne, et
(B) un matériau adsorbant polymère rendu insoluble dans l'eau, choisi parmi :
(a) un homopolymère d'un monomère choisi parmi les (méth)acrylamides N-alkyl- ou N-alkylène-substitués, représentés par la formule générale (I) ou (II) suivante :

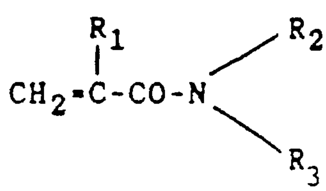

(I)

dans laquelle $R_1$ représente un atome d'hydrogène ou un groupe méthyle, $R_2$ représente un atome d'hydrogène ou un groupe méthyle ou éthyle, et $R_3$ représente un groupe méthyle, éthyle ou propyle, ou

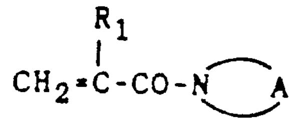

(II)

dans laquelle $R_1$ représente un atome d'hydrogène ou un groupe méthyle et A est choisi dans le groupe constitué par $-(CH_2)_n-$ , ou $-(CH_2)_2-O-(CH_2)_2-$ , n étant un nombre entier de 4 à 6 ;

(b) un premier copolymère de deux ou de plusieurs monomères choisis parmi lesdits (méth)-acrylamides, et

(c) un second copolymère d'au moins un monomère choisi parmi lesdits (méth)acrylamides et un ou plusieurs monomères autres que lesdits (méth)acrylamides et copolymérisables avec eux; et

(2) mettre ensuite en contact ledit matériau libérateur de masse moléculaire élevée, contenant des composés organiques hydrosolubles, avec un milieu aqueux.

**Patentansprüche**

1. Zusammengesetztes Material mit hohem Molekulargewicht zur Freisetzung einer wasserlöslichen organischen Verbindung bestehend aus

(A) einer wasserlöslichen organischen Verbindung ausgewählt aus

(a) Verbindungen enthaltend aktive Wasserstoffatome, die durch eine oder mehrere Hydroxyl-, Carboxyl-, Sulfonsäure-, Phosphorsäure- oder Mercaptogruppen substituiert sind und

(b) Verbindungen enthaltend eine hydrophobe Gruppe, die als hydrophobe Gruppen zyklische Strukturen, wie aromatische Ringe und langkettige Kohlenwasserstoffreste enthält, und

(B) einem wasserunlöslich gemachte polymeren adsorbierenden Material ausgewählt aus

(a) einem Homopolymerisat eines Monomeren ausgewählt aus N-Alkyl oder N-Alkylen-substituierten (Meth)Acrylamiden der folgenden allgemeinen Formeln (I) oder (II):

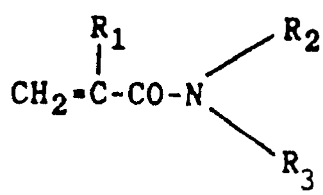

(I)

in denen $R_1$ ein Wasserstoffatom oder eine Methylgruppe ist, $R_2$ ein Wasserstoffatom oder eine Methyl- oder Ethylgruppe ist und $R_3$ eine Methyl-, Ethyl- oder Propylgruppe ist oder

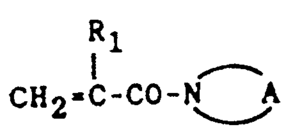

(II)

in der $R_1$ ein Wasserstoffatom oder eine Methylgruppe und A eine Gruppe ausgewählt aus den Gruppen bestehend aus $-(CH_2)_n-$ oder $-(CH_2)_2-O-(CH_2)_2-$ darstellt, wobei n eine ganze Zahl von 4 bis 6 ist

(b) einem ersten Copolymeren von zwei oder mehr Monomeren ausgewählt aus den genannten (Meth)Acrylamiden und

(c) einem zweiten Copolymerisat von wenigstens einem Monomeren ausgewählt aus den genannten (Meth)Acrylamiden und ein oder mehreren Monomeren, die verschieden sind von den genannten (Meth)Acrylamiden und hiermit copolymerisierbar sind.

2. Zusammengesetztes Material mit hohem Molekulargewicht nach Anspruch 1, in welchem die aktiven

Wasserstoffatome in Form (1) einer oder mehreren Hydroxylgruppen, die an einen aromatischen Ring oder einem aliphatischen Kohlenwasserstoffrest resubstituiert sind oder (2) einer oder mehreren Carboxylgruppen, die an einen aromatischen Kohlenwasserstoffrest oder einen aliphatischen Kohlenwasserstoffrest resubstituiert sind, vorliegen.

3. Zusammengesetztes Material mit hohem Molekulargewicht nach Anspruch 1, worin die Verbindungen, die eine hydrophobe Gruppe enthalten, ausgewählt sind aus oberflächenaktiven Mitteln, Proteinen, physiologisch aktiven Substanzen und Färbemitteln.

4. Zusammengesetztes Material mit hohem Molekulargewicht nach Anspruch 1, wobei die wasserlösliche organische Verbindung eine oder mehrere Hydroxylgruppen, die an einen aromatischen Ring substituiert sind, enthalten, wobei die wasserlösliche organische Verbindung z.B. ausgewählt ist aus Phenol, Kresol, Xylenol, Hydrochinon, Benzoltriol, Salicylalkohol, Naphthol, Anthrol, Nonylphenol, Carvacrol, Vinylphenol, Isopropenylphenol, Diphenylphenol, Biphenyldiol, Naphtyhlphenol, Phenylnaphthol, p-Cumylphenol und 4,4'-Dihydroxydiphenylsulfon.

5. Zusammengesetztes Material mit hohem Molekulargewicht nach Anspruch 1, wobei die wasserlösliche organische Gruppe eine oder mehrere Hydroxylgruppen enthält, die an einen aliphatischen Kohlenwasserstoffrest substituiert sind, wobei die organische Verbindung ein gesättigter aliphatischer Alkohol ist.

6. Zusammengesetztes Material mit hohem Molekulargewicht nach Anspruch 3, wobei die wasserlösliche organische Verbindung ein oberflächenaktives Mittel ist, ausgewählt aus den anionischen, nicht ionischen, kationischen und amphoteren oberflächenaktiven Mitteln.

7. Zusammengesetztes Material mit hohem Molekulargewicht nach Anspruch 3, wobei die wasserlösliche organische Verbindung ein Protein ist, das ein Molekulargewicht im Bereich von 1.000 bis 1.000.000 hat.

8. Zusammengesetztes Material mit hohem Molekulargewicht nach Anspruch 3, worin die wasserlösliche organische Verbindung eine physiologisch aktive Substanz ist, ausgewählt aus Antibiotika, Hypnosedativa, Antiepileptika, Antipyretika, Analgetika, Antiphlogistika, Arzneimittel gegen psychische und nervöse Zustände, Dämpfungsmittel, Muskelentspannungsmittel, autonome Arzneimittel, Arzneimittel für die Sinnesorgane, Antihistaminika, Cardiotonika, Antiarrhytmika, Mittel gegen Blutüberdruck sowie Diuretika, Gefäßerweiterungsmittel, therapeutische Mittel gegen Arteriosklerose, Mittel gegen Keuchhusten, Anti-Becher-Mittel und Expektorantia, organische Digestiva, Adrenalhormonpräparate, Sexualhormone und andere Hormonpräparate, Bakterizide und desinfizierende Mittel, Vitaminpräparate, Nährmittel, Antasthenika und alternative Mittel, Antikoagulantien, blutungshemmende Mittel, Lebermittel, therapeutische Arzneimittel gegen Vergiftungen, Enzympräparate, Antidiabetika, Arzneimittel gegen maligne Tumoren, Chemotherapeutika, biologische Präparate, Anthelmintika, Antiprotozoenmittel und Narkotika.

9. Zusammengesetztes Material mit hohem Molekulargewicht nach Anspruch 3, worin die wasserlösliche organische Verbindung ein Färbemittel ausgewählt aus Formfarbstoffen, organischen Pigmenten, Färbemitteln und Titrierindikatoren ist.

10. Zusammengesetztes Material mit hohem Molekulargewicht nach Anspruch 1, worin das Acrylamid-Monomer ausgewählt ist aus N-Acryloyl-pyrrolidin und N-Acryloyl-piperidin.

11. Verfahren zum Freisetzen einer wasserlöslichen organischen Verbindung, bestehend aus folgenden Stufen:

(1) Bilden eines Freisetzungsmaterials mit hohem Molekulargewicht bestehend aus

(A) einer wasserlöslichen organischen Verbindung ausgewählt aus
(a) Verbindungen enthaltend aktive Wasserstoffatome, die durch eine oder mehrere Hydroxyl-, Carboxyl-Sulfonsäure-, Phosphorsäure- oder Mercaptogruppen substituiert sind und
(b) Verbindungen enthaltend eine hydrophobe Gruppe, die als hydrophobe Gruppen zyklische Strukturen, wie aromatische Ringe und langkettige Kohlenwasserstoffreste enthalten und
(B) einem wasserunlöslich gemachten polymeren adsorbierenden Material ausgewählt aus

(a) einem Homopolymerisat eines Monomeres ausgewählt aus N-Alkyl- oder N-Alkylen-substituierten (Meth)Acrylamiden der folgenden allgemeinen Formel (I) oder (II):

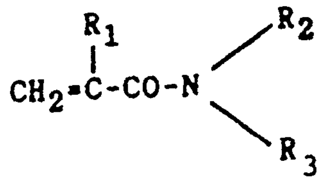

(I)

in der $R_1$ ein Wasserstoffatom oder eine Methylgruppe ist, $R_2$ ein Wasserstoffatom oder eine Methyl- oder eine Ethylgruppe ist und $R_3$ eine Methyl-, Ethyl- oder eine Propylgruppe ist oder

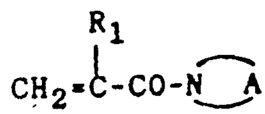

(II)

in der $R_1$ ein Wasserstoffatom oder eine Methylgruppe ist A eine Gruppe ausgewählt aus $-(CH_2)_n-$ oder $-(CH_2)_2-O-(CH_2)_2-$ worin n eine ganze Zahl von 4 bis 6 ist;

(b) einem ersten Copolymerisat von zwei oder mehr Monomeren ausgewählt aus den genannten (Meth)Acrylamiden und

(c) einem zweiten Copolymerisat von wenigstens einem Monomer ausgewählt aus den (Meth)-Acrylamiden oder einer oder mehreren Monomeren, die von den genannten (Meth)Acrylamiden verschieden sind und damit copolimerisierbar sind; und

(2) anschließendem Kontaktieren des hochmolekularen freisetzenden Materials, das die wasserlöslichen organischen Verbindungen enthält, mit einem wässrigen Medium.